# EUROPÄISCHE PATENTSCHRIFT

(11) **EP 1 972 473 B1**
(45) Veröffentlichungstag und Bekanntmachung des Hinweises auf die Patenterteilung: **16.05.2012**
(21) Anmeldenummer: 08005312.7
(22) Anmeldetag: 20.03.2008
(51) Int. Cl.: B60H 1/00

(54) **Klimaanlage für ein Kraftfahrzeug**
Air conditioning system for a motor vehicle
Climatisation pour un véhicule automobile

(30) Priorität: 23.03.2007 DE 102007014706
(43) Veröffentlichungstag der Anmeldung: 24.09.2008
(73) Patentinhaber: Behr GmbH & Co. KG, 70469 Stuttgart (DE)
(72) Erfinder: Otzelberger, Norbert, 70376 Stuttgart (DE); Burkhardt, Carsten, 74653 Künzelsau (DE); Wipfler, Klaus, 75223 Niefern (DE); Schweizer, Gebhard, 71229 Leonberg (DE); Feith, Thomas, 70825 Korntal-Münchingen (DE)
(74) Vertreter: Grauel, Andreas

(56) Entgegenhaltungen:
- EP-A- 1 327 541
- DE-A1- 4 022 932
- DE-A1- 10 261 037
- DE-A1-102006 027 996
- US-A- 4 440 212
- US-A- 4 940 083

## Beschreibung

Die Erfindung betrifft eine Klimaanlage gemäß dem Oberbegriff des Anspruches 1.

Bei Kraftfahrzeugen ist es in Zusammenhang mit der Fahrzeugklimatisierung vorteilhaft, wenn eine Temperaturschichtung vorgesehen ist, wobei die Temperatur im Fußraum höher eingestellt werden kann als dies im Bereich des Oberkörpers oder des Kopfes der Fall ist.

Aus der DE 102 61 036 A1 ist ein Klimaanlagengehäuse bekannt, welches eine Verdampfereinrichtung, eine Heizungseinrichtung, eine Mischkammer, aus der Luft zum Fond-Fußraum und zur Fondbelüftung strömt, und mit einer Luftsteuereinrichtung bekannt, welche die durch die Verdampfungseinrichtung und die Heizungseinrichtung strömende Luft mittels Mischklappen steuert. Hierbei ist ein separater Schichtungskanal vorgesehen, durch den kühle Luft in den Bereich der Fondbelüftung führbar ist. Die Mündung des Schichtungskanals zum Fondbereich ist hierbei im Bereich der Mischklappe angeordnet.

Derartige Klimaanlagen lassen noch Wünsche offen. Insbesondere kann es bei sehr kalt eingestellten oberen Zonen (Belüftung und Defrost) in ungünstigen Betriebsbedingungen zu einem Scheibenbeschlag kommen, wenn über den Defrostaustritt kalte und feuchte Luft zu den Scheiben gelangt und die Feuchtigkeit sich dort niederschlägt.

Die EP 1 327 541 A1 offenbart eine Klimaanlage gemäβ Oberbegriff des Anspruchs 1. Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage, insbesondere eine Kraftfahrzeug-Klimaanlage, vorgesehen, mit einem Gehäuse, einem Verdampfer, mindestens einem Heizer, gegebenenfalls einem Zuheizer, beispielsweise gebildet durch PTC-Elemente, mindestens einer Trennwand, welche den Luftstrom, der den Verdampfer und gegebenenfalls den Heizer durchströmt, in mindestens zwei Teilluftströme unterteilt, mindestens einem Belüftungs-Luftkanal und mindestens einem Schichtungs-Luftkanal, wobei innerhalb des Gehäuses mindestens eine sich zumindest über einen Mischbereich erstreckende Trennwand vorgesehen ist, welche einen Teilluftstrom, der zumindest teilweise dem Schichtungs-Luftkanal zugeführt wird, von einem anderen Teilluftstrom trennt, der zumindest teilweise dem Belüftungs-Luftkanal, einem Defrost-Luftkanal und einem Fuβraum-Lufthennal zugeführt wird.

Der Teilluftstrom, der durch die Trennwand vom anderen Teilluftstrom abgetrennt ist, ist mittels einer Kalt-Schichtungsklappe regelbar, die am Ende eines Bypasses um den Heizer angeordnet ist. Diese Klappe ermöglicht eine einfache Regelung des dem Schichtungs-Luftkanal zugeführten Teilluftstroms.

Erfindungsgemäß ist neben einer Kalt-Schichtungsklappe eine Warm-Schichtungsklappe vorgesehen, welche im Mischraum im Bereich zwischen dem Ende des Bypasses und dem Austritt aus dem Heizer angeordnet ist. Dadurch, dass zwei Klappen vorgesehen sind, kann eine gezielte Einstellung der Lufttemperatur und/oder Luftmenge der dem Schichtungs-Luftkanal (und bei entsprechender Ausgestaltung ggf. auch dem Fond-Luftkanal) zugeführten Luft erfolgen.

. Auf den Bereich, in welchem der Teilluftstrom strömt, der zumindest teilweise dem Schichtungs-Luftkanal zuzuführen ist, wird im Folgenden der Einfachheit halber als Schichtungs-Bereich Bezug genommen, auf den anderen Bereich wird der Einfachheit halber als Zonen-Bereich Bezug genommen. Besonders bevorzugt verläuft mindestens ein Schichtungs-Bereich zwischen zwei Zonen-Bereichen, wobei der Schichtungs-Bereich näher an der Mittellängsebene als die Zonen-Bereiche angeordnet ist. Eine derartige Anordnung bietet insbesondere Vorteile in Bezug auf den Bauraum. Hierbei sind die Kaltwege, d.h. die Bypässe um den Heizer, im Unterschied zu üblichen Lösungen nicht übereinander verlaufend oder von außen aufgesetzt, d.h. den Kern der Klimaanlage umgehend, angeordnet, sondern direkt nebeneinander angeordnet. Durch eine derartig integrierte Anordnung lässt sich zudem eine Temperierung der dem Schichtungs-Luftkanal zugeführten, und anschließend dem (Front-)Belüftungs-Luftkanal zugeführten Luft erreichen.

Dadurch, dass der Teilluftstrom, der dem Schichtungs-Luftkanal zugeführt wird, temperierbar ist, d.h. bedarfsgerecht den Verdampfer und vollständig oder ggf. auch nur teilweise den Heizer durchströmt, kann die Temperaturdifferenz zwischen den Belüftungsaustritten und den Austritten Defrost und Fußraum im Wesentlichen frei eingestellt werden.

Vorzugsweise ist die Trennwand, welche einen Schichtungs-Bereich von einem Zonen-Bereich trennt, parallel zu und nach außen versetzt bezüglich der Mittellängsebene der Klimaanlage angeordnet.

Besonders bevorzugt ist die Trennwand, welche einen Schichtungs-Bereich von einem Zonen-Bereich trennt, parallel zur Zonen-Trennwand angeordnet, welche in der Mittellängsebene der Klimaanlage verläuft.

Die dem Schichtungs-Luftkanal zugeordneten Bereiche des Heizers und/oder Verdampfers sind vorzugsweise im Bereich der Mittellängsebene der Klimaanlage angeordnet, und die dem Belüftungs-Luftkanal, dem Defrost-Luftkanal und dem Fußraum-Luftkanal zugeordneten Bereiche des Heizers und/oder Verdampfers sind bevorzugt seitlich versetzt, beabstandet von der Mittellängsebene der Klimaanlage angeordnet. Dies ergibt eine zentrale Anordnung des oder der Schichtungs-Bereiche und eine äußere Anordnung der Zonen-Bereiche. Die ansonsten häufig üblichen, außen angeordneten, ggf. auch nachträglich an das Gehäuse angesetzten Kanäle für den Schichtungs-Luftkanal entfallen, so dass sich u.a. Vorteile in Bezug auf die Montage, insbesondere aber in Bezug auf eine kompakte Bauform, ergeben.

Besonders bevorzugt ist der Teilluftstrom, der durch die Trennwand vom anderen Teilluftstrom abgetrennt ist, teilweise dem Schichtungs-Luftkanal und teilweise einem Fond-Luftkanal zuführbar. Dies ermöglicht eine relativ einfache, sehr kompakte Bauweise der Klimaanlage, bei welcher auch eine gewisse Temperierung des Fondbereichs vorgesehen ist, die im Wesentlichen unabhängig von der Temperierung des Frontbereichs ist. Für den Fond-Luftkanal ist - zwecks unabhängiger Temperierung - besonders bevorzugt ein Kaltluft-Bypass zentral unterhalb des Heizers verlaufend, angeordnet, dem ein Warmluftkanal, geregelt mittels einer Klappe am Austritt, zugeführt wird. Der Kaltluft-Bypass kann hierbei breiter ausgebildet sein als der oberhalb angeordnete Schichtungsbereich.

Das Regeln einer Kraftfahrzeug-Klimaanlage mit einer Temperaturschichtung der über einen Belüftungs-Luftkanal dem Fahrzeuginnenraum zuzuführenden Luft, welchem über einen Schichtungs-Luftkanal Luft zugeführt wird, sieht erfindungsgemäß vor, dass die Luft, welche über den Schichtungs-Luftkanal der temperierten Luft des Belüftungs-Luftkanals zugeführt wird, temperiert wird, wobei mittels mindestens einer Klappe zumindest ein Teilluftstrom, welcher dem Schichtungs-Luftkanal zugeführt wird, den Heizer durchströmt.

Hierbei ist erfindungsgemäß vorgesehen, dass zwei Schichtungsklappen vorgesehen sind, wobei die Regelung der Schichtungsklappen nur ein vollständiges Öffnen oder Schließen vorsieht, so dass jeweils eine der besagten Klappen geöffnet und die andere Klappe geschlossen ist.

Alternativ kann bei zwei Klappen die Regelung der Schichtungsklappen in Abhängigkeit der Temperatur des Belüftungs-Luftkanals erfolgen, wobei die Regelung der Schichtungsklappen eine konstante Lufttemperatur im Schichtungs-Luftkanal bei veränderlichem Luftmengendurchsatz vorsieht, so dass sich insgesamt am Luftaustritt des Belüftungs-Luftkanals in den Fahrzeuginnenraum eine im Wesentlichen konstante Absenkung oder Anhebung der Lufttemperatur des Belüftungs-Luftkanals in Folge des Zuführens der Luft des Schichtungs-Luftkanals über den gesamten Temperatur-Regelbereich ergibt. Bevorzugt beträgt die Temperaturdifferenz jeweils 10K.

Auch in Bezug auf den Luftmassenstrom kann durch die beiden Klappen eine entsprechende Regelung erfolgen, bspw. dass der Luftmassenstrom durch den Schichtungs-Luftkanal maximal 30% des Luftmassenstroms durch den Belüftungs-Luftkanal (im Bereich vor dem Zuführen des Schichtungs-Luftkanals) beträgt.

Insbesondere bevorzugt erfolgt eine Regelung der Temperatur der den Schichtungs-Luftkanal durchströmenden Luft in den Betriebsstellungen "maximal kalt" und "maximal warm" derart, dass auch im Schichtungs-Luftkanal der Teilluftstrom - entsprechend dem Teilluftstrom durch den Zonen-Bereich der Klimaanlage - ausschließlich durch den Verdampfer bzw. vollständig durch den Heizer geleitet wird, so dass der Schichtungs-Luftkanal bei diesen Extremstellungen die Funktion des Belüftungs-Luflkanals unterstützt und in Folge des vergrößerten Luftmassenstroms schneller die gewünschte Temperatur im Fahrzeuginnenraum erreicht werden kann. Die Aufteilung des Luftstroms auf den Belüftungs- und Schichtungs-Luftkanal hat in Folge des bei gleichem dem Fahrzeuginnenraum zuzuführenden Luftmassenstrom deutlich vergrößerten Strömungsquerschnitt in Bezug auf eine Durchleitung des entsprechenden Luftmassenstroms ausschließlich durch den Belüftungs-Luftkanal hat unter anderem Vorteile in Bezug auf die Akustik.

Durch eine entsprechende Regelung der Lufttemperatur im Schichtungs-Luftkanal kann zudem ein ungewolltes Beschlagen der Scheiben bei einem Zuführen von kalter Luft über den Defrost- und den Belüftungs-Luftkanal gezielt verhindert werden.

Im Folgenden wird die Erfindung anhand zweier Ausführungsbeispiele und zweier Prinzipskizzen unter Bezugnahme auf die Zeichnung im Einzelnen erläutert. Es zeigen:
- Fig. 1: eine schematische perspektivische Ansicht einer Kraftfahrzeug- Klimaanlage gemäß dem ersten Ausführungsbeispiel,
- Fig. 2: eine Vorderansicht auf die Klimaanlage von Fig. 1,
- Fig. 3: einen Schnitt entlang Linie A-A von Fig. 2,
- Fig. 4: einen Schnitt entlang Linie B-B von Fig. 2,
- Fig. 5: eine schematische perspektivische Ansicht einer Kraftfahrzeug- Klimaanlage gemäß dem zweiten Ausführungsbeispiel,
- Fig. 6: eine Prinzipskizze zeine Klimaanlage mit einer zweizonigen Schichtung, und
- Fig. 7: eine Prinzipskizze einer Klimaanlage mit einer einzonigen Schichtung.

Eine zweizonige Kraftfahrzeug-Klimaanlage 1 weist in einem Gehäuse 2 angeordnet ein Gebläse (nicht dargestellt), einen Verdampfer 3, einen Heizer 4 und einen elektrischen Zuheizer 5 auf. Hierbei durchströmt die vom Gebläse kommende Luft, welche aus dem Fahrzeuginnenraum und/oder der Umgebung angesaugt wird, zuerst den Verdampfer 3. Geregelt durch verschiedene Klappen, auf die an späterer Stelle näher eingegangen wird, wird - entsprechend den Anforderungen in Bezug auf die Temperatur der dem Fahrzeuginnenraum zuzuführenden Luft - die kalte, vom Verdampfer 3 kommende Luft durch den nachfolgend angeordneten Heizer 4 und Zuheizer 5 oder über einen Bypass 6 vorbei an denselben geleitet. Um im Falle eines reinen Kühlbetriebs ein Rückströmen von Luft zum Heizer/Zuheizer zu verhindern, ist hinter dem Heizer 4 und Zuheizer 5 eine Temperaturklappe 7 angeordnet.

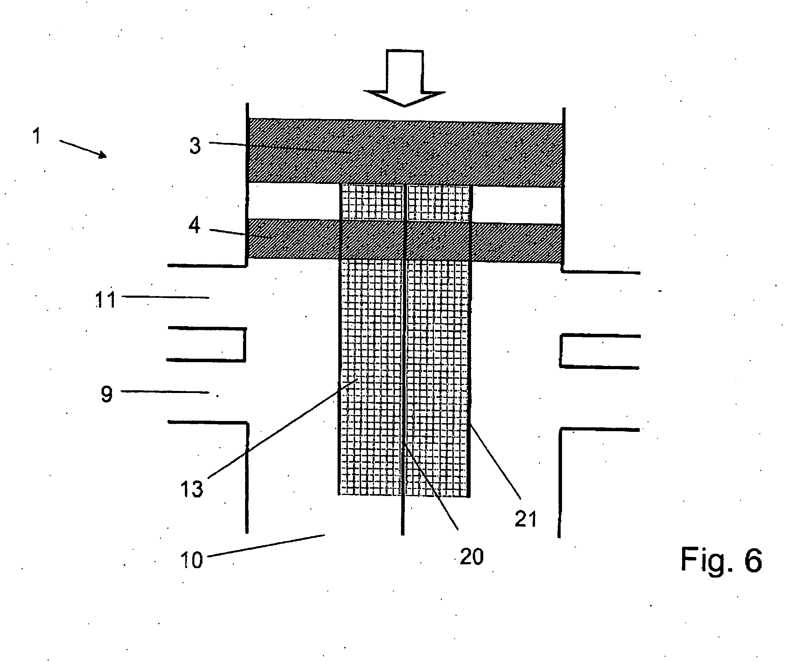

Ausgehend vom nach dem Bypass 6 und dem Strömungsweg durch den Heizer 4 und Zuheizer 5 angeordneten Mischraum 8 sind verschieden Luftkanäle angeordnet, nämlich ein Defrost-Luftkanal 9, geregelt mittels einer Defrost-Klappe, ein Belüftungs-Luftkanal 10, geregelt mittels einer Belüftungs-Klappe, und ein Fußraum-Luftkanal 11, geregelt über eine Fußraumklappe. Die Ausgestaltung ist spiegelsymmetrisch bezüglich der Mittellängsebene der Klimaanlage, in welcher bereichsweise eine Zonen-Trennwand (nicht näher dargesteltt, vgl. Prinzipskizze von Fig. 6) angeordnet ist, welche die Zone der Fahrerseite von der Zone der Beifahrerseite trennt.

Auf jeder (Zonen-)Seite ist im Gehäuse 2 ferner eine weitere Trennwand (nicht näher dargestellt, vgl. Prinzipskizze von Fig. 6) vorgesehen, im Folgenden auch als Schichtungs-Trennwand bezeichnet, welche die allgemeine Temperierung des Frontbereichs von der Temperierung eines Teilluftstroms für die Temperaturschichtung im Fondbereich trennt. Die Schichtung-Trennwand verläuft vorliegend im Wesentlichen parallel zur Zonen-Trennwand, wobei auch sie im Bereich des Bypasses 6 startet und im Bereich der Temperaturklappe 7 endet. Im reinen Heizbereich ist vorliegend keine Schichtungs-Trennwand vorgesehen. Der durch die Schichtungs-Trennwand abgetrennte Bereich des Bypasses 6 und des Mischraumes 8 wird durch die Bezugszeichen 6' bzw. 8' bezeichnet. Auf Grund der etwa streifenartigen Ausgestaltung der einzelnen Bereiche, die durch die Schichtungs-Trennwände voneinander getrennt sind, wird zur Bezeichnung der Position in Querrichtung zur Mittellängsebene der Klimaanlage 1 auch auf Bereiche, die nicht in Höhe der Schichtungs-Trennwände angeordnet sind, jedoch in Verlängerung des entsprechenden Streifens liegen, als Zonen- oder Schichtungs-Bereiche Bezug genommen. Die Klappe vor dem Heizer 4 erstreckt sich somit auf der Fahrerseite und entsprechend auf der Beifahrerseite ununterbrochen sowohl über den Zonen- als auch über den Schichtungs-Bereich.

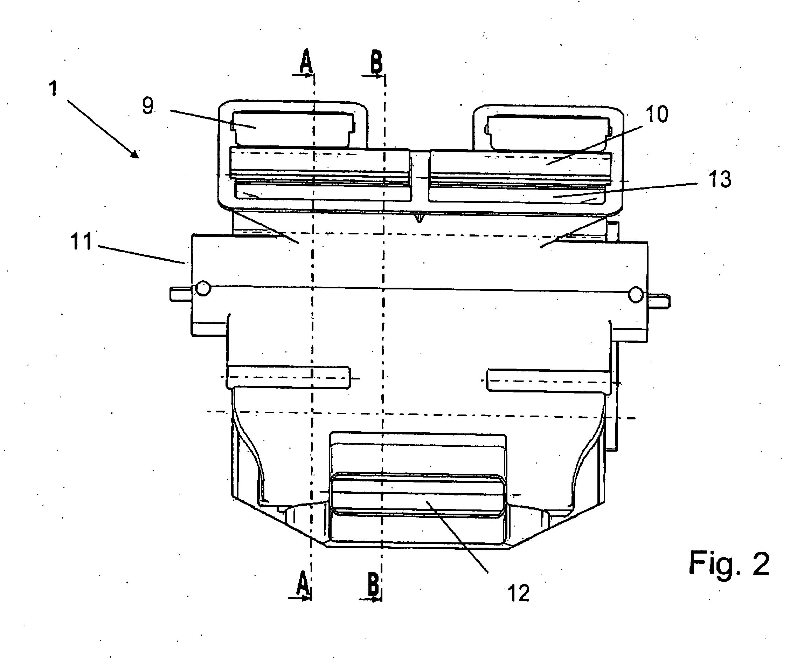

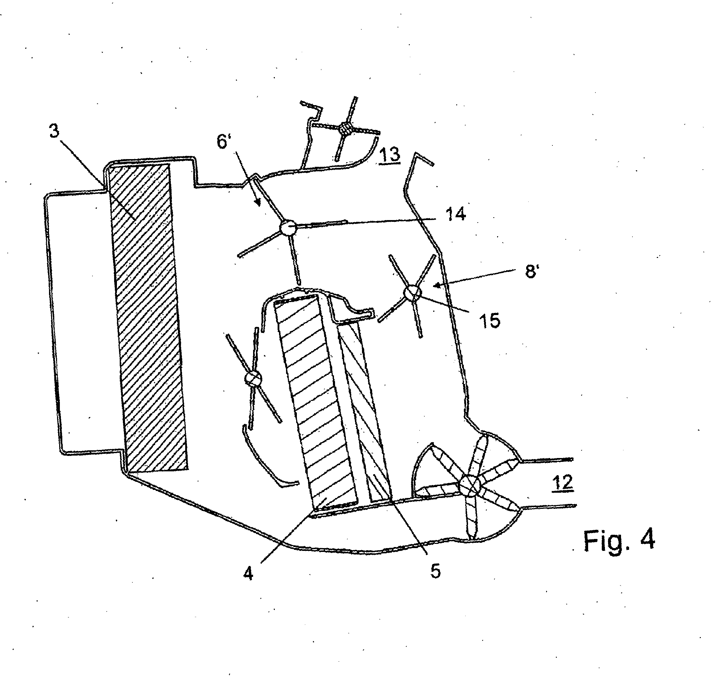

Im Gehäuse 2 sind, abgetrennt von der (Haupt-)Fronttemperierung durch besagte Schichtungs-Trennwand, ausgehend vom entsprechenden Bereich des hinter dem Bypass 6 und dem Heizer 4 und Zuheizer 5 ausgebildeten Schichtungs-Mischraums 8', ein Fond-Luftkanal 12, geregelt über eine Fond-Klappe, und ein Schichtungs-Luftkanal 13, geregelt über zwei Schichturigsklappen 14 und 15 vorgesehen (siehe Fig. 4). Der Fond-Luftkanal 12 erstreckt sich, wie aus Fig. 2 ersichtlich, über die Schichtungs-Trennwände hinaus, wie auch die Klappe, welche die Temperierung der durch den Fond-Luftkanal 12 in den Fondbereich geleiteten Luft regelt. Hierfür wird der Kaltluft, die den Heizer 4 über einen unterhalb desselben verlaufenden Fond-Bypass umgeht, bedarfsgerecht warme Luft, die durch den stets vorhandenen, vorliegend nicht mittels einer Klappe geregelten Spalt vor dem Heizer 4 strömt, beigemischt, wobei auch ein reiner Heizbetrieb, wie auch ein reiner Kühlbetrieb möglich sind.

Im Folgenden wird näher auf die Temperaturschichtung für den Frontbereich eingegangen, die im Wesentlichen unabhängig von der Fondraumtemperierung erfolgt. Die Temperaturregelung für die dem Schichtungs-Luftkanal 13 zuzuführende Luft erfolgt, wie zuvor erwähnt, mittels der beiden Schichtungsklappen 14 und 15. Die Kalt-Schichtungsklappe 14 ist hierbei im Bypass 6' mit zentral angeordneter Schwenkachse in einer Ebene der Klimaanlage angeordnet, in welcher im Bereich des Bypasses 6 des Zonen-Bereichs vorliegend zwei gekoppelte Temperaturklappen angeordnet sind. Eine versetzte Anordnung der Schwenkachsen der Temperaturklappen und der Kalt-Schichtungsklappe 14 vereinfacht die Betätigung der Klappen. Die Warm-Schichtungsklappe 15 ist etwa mittig zwischen dem Bereich in Verlängerung des Bypasses 6' und des Heizers 4 / Zuheizers 5 in der Mitte des Mischraumes 8' angeordnet, wobei auch in diesem Fall die Schwenkachsen der Temperaturklappe 7 und der Warm- Schichtungsklappe 15 nicht miteinander fluchtend angeordnet sind.

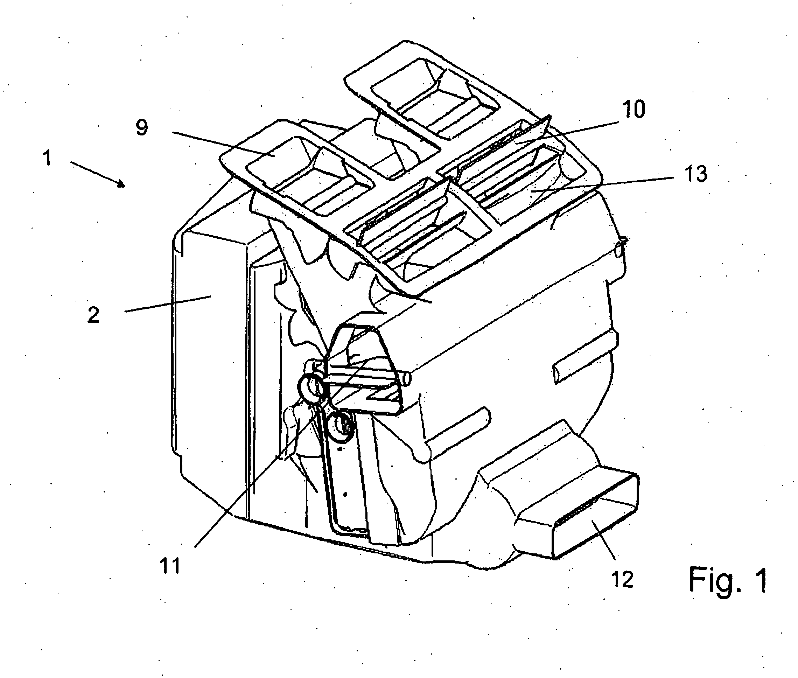

Wie aus Fig. 1 ersichtlich, sind die Luftkanalaustritte für die Front-Belüftung (Belüftungs-Luftkanal 10) und die Temperaturschichtung (Schichtungs-Luftkanal 13) nebeneinander angeordnet und mit langgestreckt rechteckförmigem Querschnitt ausgebildet.

Die Regelung der Kalt- und Warm-Schichtungsklappe 14 bzw. 15 erfolgt vorliegend derart, dass die Kalt Schichtungsklappe 14 geschlossen ist, wenn die Warm- Schichtungsklappe 15 geöffnet ist, und dass die Kalt-Schichtungsklappe 14 geöffnet ist, wenn die Warm- Schichtungsklappe 15 geschlossen ist. Gemäß dem vorliegenden Ausführungsbeispiel sind hierbei keine Zwischenstellungen möglich, wobei die Schichtungsklappen unabhängig von der Klappenstellung der im Zonen-Bereich angeordneten Klappen gesteuert werden. Durch eine Veränderung der Schichtungsklappenstellung(en) kann die Temperatur der Belüftung somit entweder erhöht oder abgesenkt werden. Ebenfalls kann - im Falle einer Schließstellung beider Klappen - keine Temperaturveränderung vorgesehen sein.

Je nach Regelung der Stellung der Schichtungsklappen 14 und 15 kann die Temperatur am Belüftungsaustritt, d.h. nach Zusammenführen von Belüftungs- und Schichtungs-Luftkanal am entsprechenden Ausströmer in den Fahrzeuginnenraum nach unten oder ggf. auch nach oben verschoben werden, wobei die Temperatur an dem Defrost-Austritt und am Fußraum-Austritt hiervon unbeeinflusst bleibt. Im Betriebszustand "maximal kalt" wird bei vollständig geöffneter Kalt- Schichtungsklappe 14 und geschlossener Warm- Schichtungsklappe 15 der Schichtungs-Luftkanal 13 von Luft mit gleicher Temperatur wie der Belüftungs-Luftkanal 10 durchströmt, so dass sich im Prinzip der Strömungsquerschnitt erhöht und mehr kalte Luft dem Fahrzeuginnenraum zur Belüftung zugeführt werden kann. Dabei wird auch die Akustik verbessert. Eine entsprechende Regelung ist auch im Falle "maximal warm" möglich, wobei in diesem Fall die Kalt- Schichtungsklappe 14 vollständig geschlossen und die Warm- Schichtungsklappe 15 vollständig geöffnet ist, so dass ausschließlich Warmluft zum Schichtungs-Luftkanal 13 gelangt.

Die Regelung der Schichtungsklappen 14 und 15 kann jedoch alternativ auch derart erfolgen, dass sich - nach Zusammenführen der den Belüftungs-Luftkanal 10 und der den Schichtungs-Luftkanal 13 durchströmenden Lufteine konstante Temperaturdifferenz von 10K - zwischen der Lufttemperatur am Eintritt in den Belüftungs-Luftkanal 10 und am Austritt aus dem Belüftungs-Luftkanal 10, nachdem der Schichtungs-Luftkanal 13 in den Belüftungs-Luftkanal 13 eingemündet ist, in den Fahrzeuginnenraum - im Falle einer Kaltluftzufuhr, d.h. bei geschlossener Warm-Schichtungsklappe 15, ergibt, wofür die über den Schichtungs-Luftkanal 13 zugeführte Luftmenge frei einstellbar ist. Eine entsprechende Regelung im Falle einer Temperaturanhebung um beispielsweise konstant 10K über den gesamten Temperaturregelbereich ist entsprechend bei geschlossener Kalt-Schichtungsklappe 14 möglich, wofür die Stellung der Warm-Schichtungsklappe 15 entsprechend dem Luftmassestrom regelbar ist.

Gemäß einer nicht erfindungsgmäβen vereinfachten Variante entfällt die Warm-Schichtungsklappe 15, wodurch sich die Regelung vereinfacht, aber die Einflussmöglichkeiten auf die Temperatur verringern.

Dadurch, dass gemäß dem vorliegenden Ausführungsbeispiel eine mittig angeordnete Zonen-Trennwand vorgesehen ist, erfolgt auch eine Zonentrennung für den Fondbereich, wie auch für die Luft, welche zur Temperaturschichtung verwendet wird. Eine derartige Zonentrennung für den Fondbereich und die Temperaturschichtung ist jedoch nicht immer erforderlich, so dass in einem Fall, bei dem hierfür keine Zonentrennung vorgesehen ist, die mittlere Zonentrennwand entfallen kann, da deren Funktion der Zonentrennung für den Frontbereich (abgesehen von der Temperaturschichtung) direkt durch die Schichtungs-Trennwände übernommen wird.

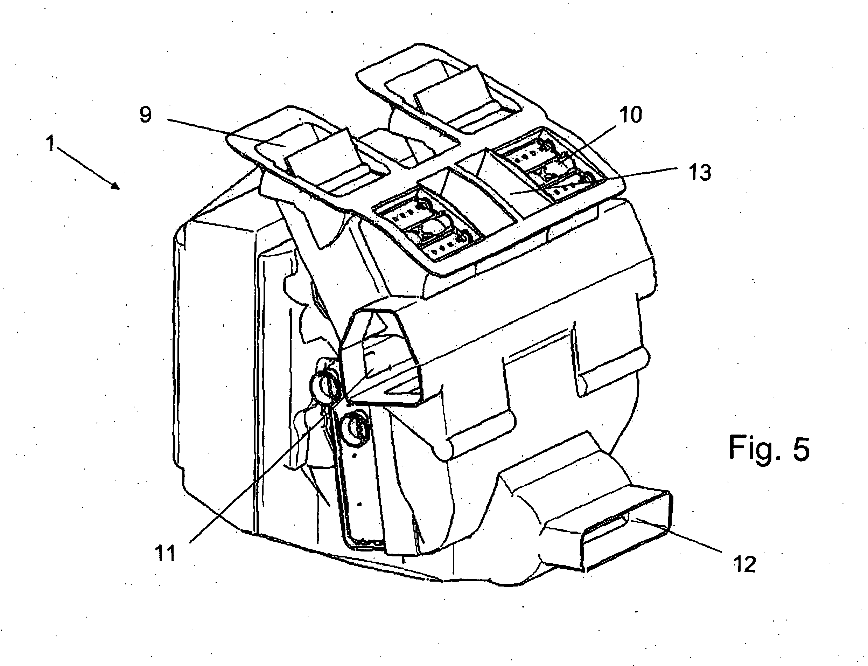

Gemäß dem zweiten Ausführungsbeispiel, welches - sofern nachfolgend nicht ausdrücklich erwähnt - dem ersten Ausführungsbeispiel entspricht, ist wiederum eine Kraftfahrzeug-Klimaanlage 1 mit Zonen-Trennwand und Schichtungs-Trennwand vorgesehen, wobei die dem Fahrzeuginnenraum zuzuführende Luft über die besagten Luftkanäle 9, 10, 11, 12 und 13 zugeführt wird. Im Unterschied zum ersten Ausführungsbeispiel sind die Luftkanalaustritte für die Front-Belüftung (Belüftungs-Luftkanal 10) und die Temperaturschichtung (Schichtungs-Luftkanal 13) mit rechteckförmigem, fast quadratischem Querschnitt ausgebildet, wobei die Schichtungs-Luftkanäle 13 zwischen den Belüftungs-Luftkanälen 10 angeordnet sind (siehe Fig. 5). Die Funktion der Schichtungsklappen im Inneren der Klimaanlage 1 entspricht der des ersten Ausführungsbeispiels, so dass hierauf nicht näher eingegangen wird.

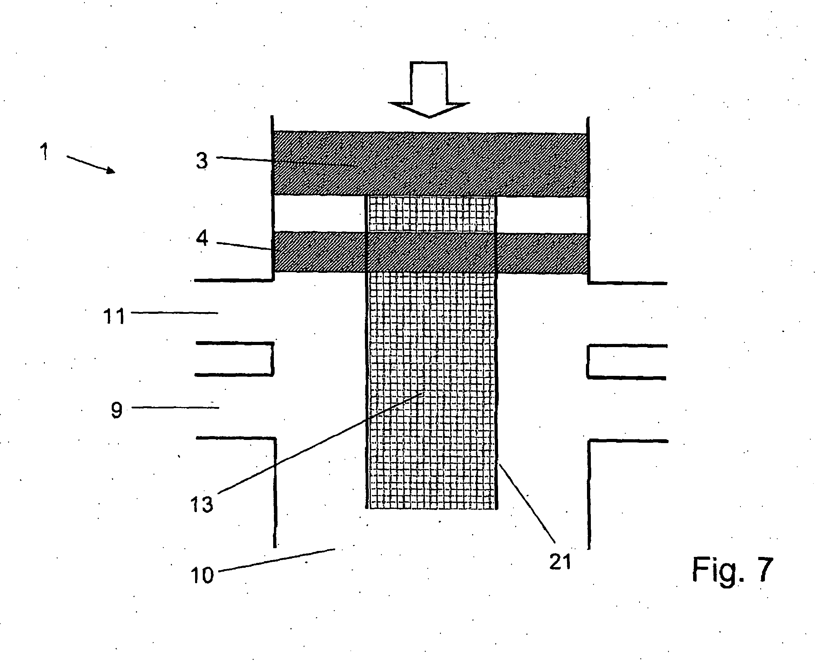

In den Figuren 6 und 7 sind zwei Prinzipskizzen derartiger Klimaanlagen 1 dargestellt. Hierbei werden die gleichen Bezugszeichen wie bei den beiden vorigen Ausführungsbeispielen verwendet.

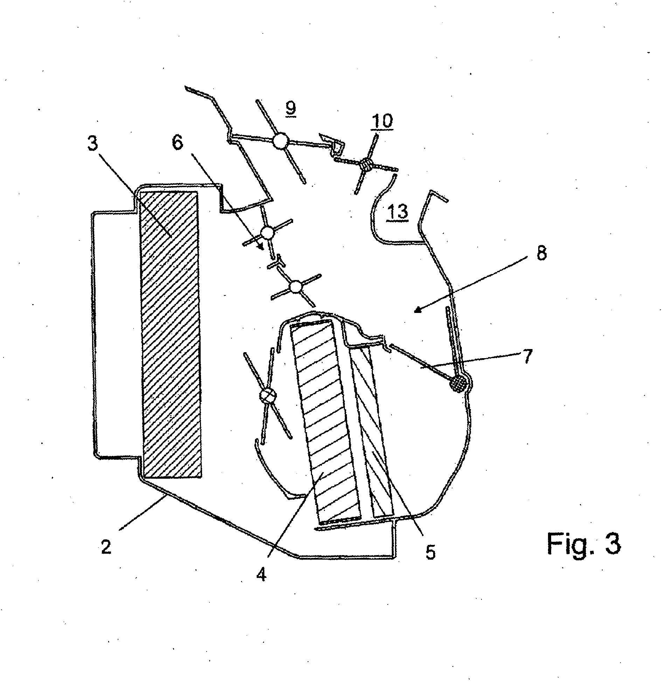

Gemäß der ersten, in Fig. 6 dargestellten Prinzipskizze, wird die vom Gebläse kommende Luft, angedeutet durch einen Pfeil im oberen Bereich der Zeichnung, durch den Verdampfer 3 und - sofern keine Umgehung desselben über den Bypass (nicht dargestellt) erfolgt - den Heizer 4 geleitet. Hierbei erfolgt eine Aufteilung des Luftstroms nach dem Verlassen des Verdampfers 3 auf vier Teilluftströme, die durch die mittlere Zonen-Trennwand 20 und spiegelbildlich zu derselben angeordnete Schichtungs-Trennwände 21 voneinander getrennt sind, wie bei den vorigen Ausführungsbeispielen unter Bezugnahme auf die Figuren 1 bis 5 beschrieben. Auf der linken Seite verlaufen hierbei die Teilluftströme, die über den linken Fußraum-Luftkanal 11, den linken Defrost-Luftkanal 9, den linken Belüftungs-Luftkanal 10 und den linken Schichtungs-Luftkanal 13 dem linken Bereich des Fahrzeugs zugeführt werden, d.h. bei links gelenkten Fahrzeugen der Fahrerseite. Entsprechend verlaufen hierbei auf der rechten Seite die Teilluftströme, die über den rechten Fußraum-Luftkanal 11, den rechten Defrost-Luftkanal 9, den rechten Belüftungs-Luftkanal 10 und den rechten .Schichtungs-Luftkanal 13 dem rechten Bereich des Fahrzeugs zugeführt werde.

Im Falle der in Fig. 7 dargestellten Prinzipskizze entfällt eine Aufteilung der Schichtungs-Luftkanäle 13 mangels Zonen-Trennwand. D.h. für die Temperaturschichtung ist keine Zonenaufteilung vorgesehen. Da jedoch die Schichtungs-Trennwände 21 vorgesehen sind, weiche durch Zwischenschieben des Schichtungs-Bereichs die Zonen-Bereiche voneinander trennen, übernehmen die Schichtungs-Trennwände 21 für die Zonen-Bereiche die Funktion der Zonen-Trennwand.

Vorliegend ist in den Prinzipskizzen keine Zone für den Fondbereich vorgesehen, welche - sofern gewünscht - bevorzugt in horizontaler Richtung verlaufend angeordnet wäre, beispielsweise wie gemäß den ersten zwei Ausführungsbeispielen vorgesehen. Dadurch, dass mehr Luft durch die Schichtungs-Bereiche der Klimaanlage als im Falle keiner Luftversorgung des Fondbereichs über den entsprechenden Bereich der Klimaanlage strömen muss, ist der entsprechende Bereich etwas größer zu dimensionieren als im Fall ohne Fondluftversorgung, um eine ausreichende Luftversorgung gewährleisten und zu hohe Luftströmungsgeschwindigkeiten vermeiden zu können.

### Bezugszeichenliste

1 Klimaanlage
2 Gehäuse
3 Verdampfer
4 Heizer
5 Zuheizer
6 Bypass 6' Schichtungs-Bypass
7 Temperaturklappe
8 Mischraum 8' Schichtungs-Mischraum
9 Defrost-Luftkanal
10 Belüftungs-Luftkanal
11 Fußraum-Luftkanal
12 Fond-Luftkanal
13 Schichtungs-Luftkanal
14 Kalt-Schichtungsklappe
15 Warm-Schichtungsklappe
20 Zonen-Trennwand
21 Schichtungs-Trennwand

## Patentansprüche

1. Klimaanlage, insbesondere Kraftfahrzeug-Klimaanlage, mit einem Gehäuse (2), einem Verdampfer (3), mindestens einem Heizer (4), mindestens einer Trennwand (20, 21), welche den Luftstrom, der den Verdampfer (3) und gegebenenfalls den Heizer (4) durchströmt, in mindestens zwei Teilluftströme unterteilt, mindestens einem Belüftungs-Luftkanal (10) und mindestens einem Schichtungs-Luftkanal (13), wobei innerhalb des Gehäuses (2) mindestens eine sich zumindest über einen Mischbereich (8, 8') erstreckende Trennwand (21) vorgesehen ist, welche einen Teilluftstrom, der zumindest teilweise dem Schichtungs-Luftkanal (13) zugeführt wird, von einem anderen Teilluftstrom trennt, der zumindest teilweise dem Belüftungs-Luftkanal (10), einem Defrost-Luftkanal (9) und einem Fußraum-Luftkanal (11) zugeführt wird, **dadurch gekennzeichnet, dass**
der Teilluftstrom, der zumindest teilweise dem Schichtungs-Luftkanal (13) zugeführt wird, mittels einer Kalt-Schichtungsklappe (14) die am Ende eines Bypasses (6') um den Heizer (4) angeordnet ist und einer Warm-Schichtungsklappe (15), welche im Mischraum (8') im Bereich zwischen dem Ende des Bypasses (6') und dem Austritt aus dem Heizer (4) angeordnet ist, regelbar ist, wobei der Schichtungs-Luftkanal (13) dem Belüftungs-Luftkanal (10) an einem Ausströmer zugeführt wird.

2. Klimaanlage nach Anspruch 1, **dadurch gekennzeichnet, dass** die Trennwand (21) parallel oder annähernd parallel zu und nach außen versetzt bezüglich der Mittellängsebene der Klimaanlage (1) angeordnet ist.

3. Klimaanlage, nach Anspruch 1 oder 2, **dadurch gekennzeichnet, dass** die Trennwand (21) parallel oder annähernd parallel zur Zonen-Trennwand (20) angeordnet ist, welche in der Mittellängsebene der Klimaanlage (1) verläuft.

4. Klimaanlage nach einem der vorhergehenden Ansprüche, **dadurch gekennzeichnet, dass** die dem Schichtungs-Luftkanal (13) zugeordneten Bereiche des Heizers (4) und/oder Verdampfers (3) im Bereich der Mittellängsebene der Klimaanlage (1) angeordnet sind, und die dem Belüftungs-Luftkanal (10), dem Defrost-Luftkanal (9) und dem Fußraum-Luftkanal (11) zugeordneten Bereiche des Heizers (4) und/oder Verdampfers (3) seitlich versetzt, beabstandet von der Mittellängsebene der Klimaanlage (1) angeordnet sind.

5. Klimaanlage nach einem der vorhergehenden Ansprüche, **dadurch gekennzeichnet, dass** der Teilluftstrom, der durch die Trennwand (21) vom anderen Teilluftstrom abgetrennt ist, teilweise dem Schichtungs-Luftkanal (13) und teilweise einem Fond-Luftkanal (12) zuführbar ist.

## Claims

1. An air conditioning system, particularly a motor vehicle air conditioning system, comprising a housing (2), an evaporator (3), at least one heater (4), at least one dividing wall (20, 21), which divides the air flow that flows through the evaporator (3) and, if applicable, the heater (4), into at least two partial air flows, at least one ventilation air duct (10) and at least one stratification air duct (13), wherein inside the housing (2) at least once dividing wail (21) is provided, extending at least across a mixing region (8, 8'), said dividing wall dividing one martial air flow, at least part of which is supplied to the stratification air duct (13), from another partial air flows at least part of which is supplied to the ventilation air duct (10), a defrost air duct (9) and a flour space air duct (11), **characterized in that** the partial air flow, at least part of which is supplied to the stratification air duct (13), is regulable by means of a could air stratification damper (14), which is positioned at the end of a bypass (6') that extends around the heater (4), and a warm air stratification damper (15), which is positioned in the mixing chamber (8') in the region between the end of the bypass (6') and the outlet from the heater (4), wherein the stratification air duct (13) is fed to the ventilation air duct (10) at an outlet.

2. The air conditioning system according to claim 1, **characterized in that** the dividing wall (21) is arranged parallel or approximately parallel to the center longitudinal plane of the air conditioning system (1) and offset toward the outside in relation thereto.

3. The air conditioning system according to claim 1 or 2, **characterized in that** the dividing wall (21) is arrange parallel or approximately parallel to the zone dividing wall (20), which extends along the center longitudinal plane of the air conditioning system (1).

4. The air conditioning system according two any once of the preceding claims, **characterized in that** the region of the heater (4) and/or of the evaporator (3) that are allocated to the stratification air duct (13) are arrange in the region of the center longitudinal plane of the air conditioning system (1), and the regions of the heater (4) and/or of the evaporator (3) that are allocated to the ventilation air duct (10), the defrost air duct (9) and the flour space air duct (11) are arranged offset literally, spaced from the center longitudinal plane of the air conditioning system (1).

5. The air conditioning system according to any one of the preceding claims, **characterized in that** the partial air flow, which is separated from the other partial air flow by the dividing wall (21), can be supplied in part to the stratification air duct (13) and in part to a rear air duct (12).

## Revendications

1. système de climatisation, en particulier système de climatisation d'un véhicule automobile, comprenant un carter (2), un évaporateur (3), au moins un dispositif de chauffage (4), au moins une paroi de séparation (20, 21) qui subdivise en au moins deux flux d'air partiels, le flux d'air qui traverse l'évaporateur (3) et le cas échéant le dispositif de chauffage (4), au moins un conduit d'air de ventilation (10) et au moins un conduit d'air de stratification (13), où il est prévu, à l'intérieur du carter (2), au moins une paroi de réparation (21) s'étendant au moins sur une zone de mélange (8, 8'), paroi de séparation qui sépare un flux d'air partiel qui est fourmi au moines partiellement au conduit d'air de stratification (13), d'un autre flux d'air partiel qui est fourni au moins partiellement au conduit d'air de ventilation (10), à un conduit d'air de dégivrage (9) et à un conduit d'air (11) de l'espace arrière pour les pieds,
**caractérisé en ce que** le flux d'air partiel, qui est fourni au moines partiellement au conduit d'air de stratification (13), g est réglable au moyen d'un volet de stratification d'air froid (14) qui est disposé autour du dispositif de chauffage (4), au niveau de l'extrémité d'une dérivation (6'), et au moyen d'un volet de stratification d'air chaud (15) qui est disposé, dans l'espace de mélange (8'), dans la zone comprise entre l'extrémité de la dérivation (6') et la sortie du dispositif de chauffage (4), où le conduit d'air de stratification (13) débouche dans le conduit d'air de ventilation (10), au niveau d'un diffuseur.

2. Système de climatisation selon la revendication 1, **caractérisé en ce que** la paroi de séparation (21) est disposée de façon parallèle ou presque parallèle au plan longitudinal médian du système de climatisation (1) et en étant décalés vers l'extérieur par rapport audit plan longitudinal médian.

3. Système de climatisation selon la revendication 1 ou 2, **caractérisé en ce que** la paroi de séparation (21) est disposée de façon parallèle ou presque parallèle à la paroli de séparation (20) des zones, paroi de réparation qui s'étend dans le plan longitudinal médian du système de climatisation (1).

4. système de climatisation selon l'une quelconque des revendications précédentes, **caractérisé en ce que** les zones du dispositif de chauffage (4) et / ou de l'évaporateur (3), associées au conduit d'air de stratification (13), sont disposées dans la zone du plan longitudinal médian du système de climatisation (1), et les zones du dispositif de chauffage (4) et / ou de l'évaporateur (3), associées au conduit d'air de ventilation (10), au conduit d'air de dégivrage (9) et au conduit d'air (11) de l'espace arrière pour les pieds, sont disposées en étant espacées du plan longitudinal médian du système de climatisation (1) et décalées latéralement.

5. Système de climatisation selon l'une quelconque des revendications précédentes, **caractérisé en ce que** le flux d'air partiel, qui est séparé de l'autre flux d'air partial par la paroi de réparation (21), peut être fourni partiellement au conduit d'air de stratification (13) et partiellement à un conduis d'air (12) placé à l'arrière.
